Europäisches Patentamt

European Patent Office

Office européen des brevets

(11) Publication number: **0 014 075**
**A1**

(12) **EUROPEAN PATENT APPLICATION**

(21) Application number: 80300160.1

(22) Date of filing: **17.01.80**

(51) Int. Cl.³: **F 02 C 7/26**

(30) Priority: **22.01.79 US 5629**

(43) Date of publication of application: **06.08.80**
Bulletin 80/16

(84) Designated Contracting States: **DE FR GB IT SE**

(71) Applicant: **THE GARRETT CORPORATION,**
**9851-9951 Sepulveda Boulevard P.O. Box 92248, Los**
**Angeles, California 90009 (US)**

(72) Inventor: **Scheip, Rainer H., 12414 South 131st Street,**
**Chandler, Arizona (US)**

(74) Representative: **Taylor, Duncan Alistair et al, Messrs.**
**Kilburn & Strode 30 John Street, London WC1N 2DD**
**(GB)**

(54) **Fuel atomising arrangements in gas turbine engines.**

(57) In a gas turbine engine, the main air flow path leads through a compressor (14), a recuperative heat exchanger (24), a combustor (20), where fuel is injected and burnt, a turbine (16), which drives the compressor (14), and then back through the heat exchanger (24). A small portion of the air is diverted through a conduit (32) to the nozzle (28) through which the fuel is injected; this air serves to atomise the fuel. The conduit (32) leads through a boost compressor system (12), which, if the air pressure available for atomisation of the fuel would otherwise be inadequate, raises the pressure of the air supplied to the nozzle (28).

## "FUEL ATOMISING ARRANGEMENTS IN GAS TURBINE ENGINES"

This invention relates to gas turbine engines.

### The prior art

A gas turbine engine normally includes a compressor, a combustor to which compressed air is supplied by the compressor, and in which fuel is burnt, producing a flow of high energy exhaust gases, and a turbine which is driven by these exhaust gases, and provides power to drive the compressor, often by being mounted on the same shaft as the compressor. The fuel is introduced into the combustor through a fuel nozzle, where it is atomised, usually by a flow of air which is formed by a small portion of the compressed air supplied by the compressor. The pressure drop experienced by this air in passing through the fuel nozzle has to be above a certain minimum value if the fuel is to be properly atomised. This pressure drop is equal to the pressure drop experienced by the remainder of the compressed air in entering the combustor, but, clearly, any undue pressure drop experienced by the remainder of the compressed air will lead to impaired engine efficiency. For this reason, gas turbine engines are normally designed to have a relatively low pressure drop from compressor to combustor, but this means that, under certain engine operating conditions, fuel atomisation will be unsatisfactory, especially when a high viscosity fuel such as diesel fuel is being used. More particularly, these atomisation difficulties tend to arise during starting, and during certain engine acceleration modes, when the fuel flow is relatively high, in relation to the flow of atomising air, and these difficulties lead to ignition difficulties and poor engine efficiency under these conditions. High altitude operation and low ambient temperatures may tend to aggravate these difficulties.

Various systems have been developed including, for example, nozzle assist devices for providing pressurised "secondary" air to a fuel nozzle during starting to improve fuel atomisation momentarily. However, these devices add significantly to the cost and complexity of the fuel nozzle system, and are of little value during other modes of engine operation such as acceleration. Other relatively complicated auxiliary fuel nozzle systems have also been proposed which employ specially designed fuel nozzle systems for adequate atomisation during starting, and which may be fed with high pressure gas, for example from pressurised cartridges, in order to start the engine. However, these special starting nozzles normally must be disabled after the engine is started, and conventional "run" nozzles supplied with compressor discharge air are employed during "running" conditions. Again, the special nozzles designed for improved atomisation are of little value at other operational conditions such as acceleration, when improved atomisation is required. Accordingly, these systems require duplicate fuel nozzle arrangements which undesirably raise the cost and complexity of the engine, can contribute to fuel nozzle fouling, and yet do not completely satisfy atomisation requirements at all conditions of engine operation.

For improved efficiency, it is well known to employ a recuperating heat exchanger in combination with the basic gas turbine components. This heat exchanger serves to transfer heat from the exhaust gases leaving the turbine to the compressed air flowing from the compressor to the combustor. The compressed air ultimately supplied to the combustor via the recuperator thus is at a substantially higher energy level than it would be were the recuperator not employed. In this manner, substantially less fuel is required in the combustor to raise the combustor exhaust gases to design temperature limits, resulting in substantially improved engine fuel economy. A portion of the heated air from the recuperator is used for the atomisation of the fuel. Because of the high temperature of this air, there may be a tendency for the fuel nozzles to become fouled as a result of coking of the fuel, especially on engine shutdown.

Summary of the invention

According to the present invention, a gas turbine engine comprising a combustor, a turbine driven by exhaust gases from the combustor, and a compressor driven by the turbine and connected to supply compressed air to the combustor, the combustor including a fuel nozzle to which fuel is supplied for atomisation by a portion of the compressed air supplied by the compressor, is characterised by a boost compressor system connected in a conduit through which the said portion of the compressed air is supplied to the fuel nozzle, the boost compressor system being operated under certain engine operating conditions to increase the pressure of the compressed air supplied to the fuel nozzle.

With such an arrangement, the boost compressor system is operated when necessary to maintain correct fuel atomisation, especially during starting and acceleration phases of engine operation. When no pressure increase is required for correct atomisation, the boost compressor system is disabled, allowing the compressed air to reach the combustor without any further compression.

The invention is particularly but not exclusively applicable to gas turbine engines having recuperators. In such an application, the conduit for supplying a portion of the compressed air to the fuel nozzle preferably leads off from the flow path of the compressed air from the compressor, upstream of the heat exchanger. This means that the air used for atomisation will be cooler than if it were tapped off downstream of the recuperator, and this may help to reduce fuel nozzle fouling resulting from coking of the fuel; it also means that any pressure drop across the recuperator will increase the pressure drop available for the atomising air.

Brief description of the drawings

The accompanying drawings illustrate one embodiment of the invention, together with a modification thereof. In such drawings:

Figure 1 is a schematic diagram of a gas turbine engine incorporating an air blast fuel nozzle system embodying the invention;

Figure 2 is a schematic diagram of the fuel nozzle system of Figure 1; and

Figure 3 is a schematic diagram of an alternative form of the fuel nozzle system.

Detailed description of the preferred embodiments.

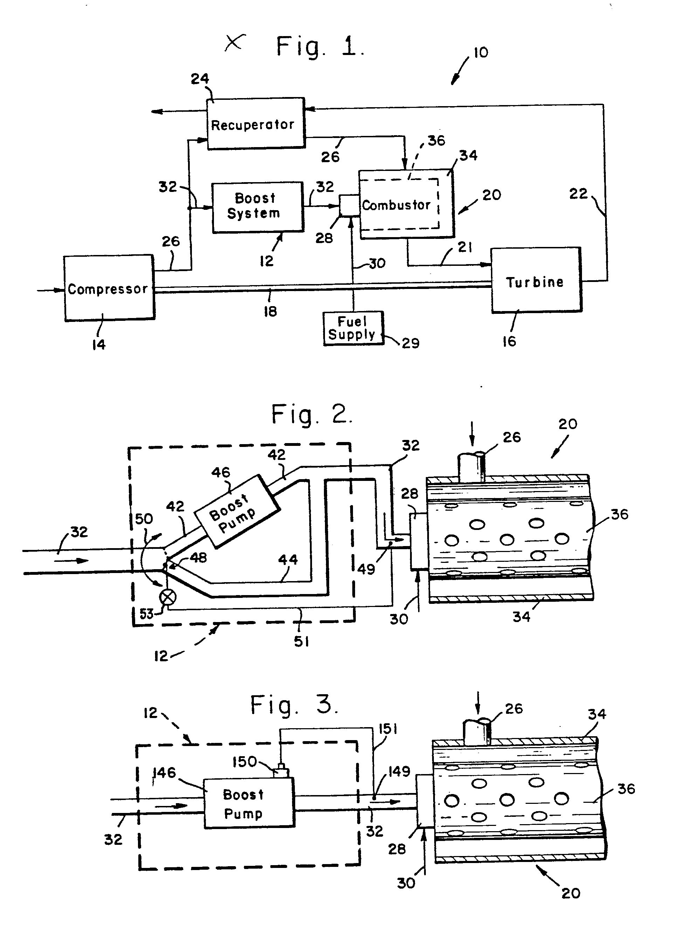

Figure 1 shows a gas turbine engine 10, comprising a compressor 14 and a turbine 16 connected together on a common shaft 18. The compressor 14 operates to compress ambient air, and to supply the air through a recuperator or heat exchanger 24 to a combustor 20. In the combustor 20, the compressed air is combined with fuel, which burns to yield high energy, high temperature exhaust gases which are supplied via a conduit 21 to drive the turbine 16. In this manner, the turbine 16 produces power which may be used to drive external loads, as well as to drive the compressor 14 via the shaft 18 for compression of the ambient air.

As shown in Figure 1, the exhaust gases leaving the turbine 16 are fed by a conduit 22 to the recuperator 24. The recuperator 24 serves to recover a substantial portion of the remaining heat energy in these exhaust gases, and to transfer this heat energy to the compressor discharge air flowing in the conduit 26. In this manner, substantial fuel economies may be effected in the operation of the combustor.

A fuel nozzle 28 is mounted on the combustor 20, and is supplied with fuel from a fuel supply 29 by a fuel line 30. This fuel is atomised in the nozzle and injected into the combustor 20 by means of compressed blast air taken from the discharge side of the compressor 14 upstream of the recuperator 24 and supplied to the nozzle 28 via a line 32 and a pressure boost system 12. The specific construction of the nozzle 28 is not shown or described in detail, since a variety of nozzle constructions is suitable for use with the present invention; however, one preferred form of nozzle construction is that shown and described in our British Patent Application No. 22526/78.

The mixture of the atomised fuel and the blast air supplied through the conduit 32 burns within the combustor 20, along with the secondary air supplied to the combustor from the recuperator 24 by the conduit 26. The combustor 20 comprises an outer shell 34 in which is mounted a can-type perforated or annular combustor element 36. The atomised fuel and blast air stream is initially ignited within the combustor element 36 by a suitable igniter (not shown), with further sustained combustion occurring within the element 36 by virtue of the entry of the secondary air into the shell 34 via the conduit 26.

The blast air supplied through the conduit 32 comprises a small portion of the compressor discharge air. Under certain engine operating conditions, the pressure boost system 12 raises the pressure of the blast air supplied to the fuel nozzle 28. In this manner, the pressure of the blast air supplied to the nozzle 28 is kept high enough, relative to the pressure prevailing within the combustor 20, to ensure complete atomisation of the fuel, even during starting, or at other times when the pressure level of the compressor discharge blast air would otherwise be insufficient for proper engine operation.

One embodiment of the pressure boost system 12 is shown in Figure 2. In this embodiment, the compressed blast air conduit 32 leading from the compressor 14 splits upstream of the fuel nozzle 28 into two branch conduits 42 and 44. The branch conduit 42 leads through a supercharging boost pump 46, which may comprise, for example, an electrically driven vane-type pump, or a positive displacement plunger pump, or any other suitable type of pump. In operation, the boost pump 46 is driven, in this example by an external power source, to raise the pressure level of the comprssed blast air, as described above.

The second branch conduit 44 leads, without interruption, from the conduit 32 around the boost pump 46 to the fuel nozzle 28. A two-way valve 48 is mounted at the upstream junction of the branch conduits 42 and 44, and is controlled by a controller 53 for shifting, as illustrated by arrow 50, to close one of the conduits 42 and 44, so that the compressed air is either boosted in pressure by the boost pump 46, or is fed directly through the open conduit 44 to the nozzle 28. In operation, the valve 48 bypasses the air around the boost pump 46 through the open conduit 44 whenever there is sufficient blast air flow through the compressor 14 for proper engine operation. It may be pointed out that, even when the boost pump 46 is bypassed, the blast air supplied to the nozzle 28, which air has not passed through the recuperator 24, is at a higher pressure than the secondary air supplied to the combustor 20 via the conduit 26 and the recuperator 24, resulting in improved fuel atomisation.

As shown by way of example in Figure 2, the control scheme for the valve 48 may comprise a pressure sensor 49 mounted in the conduit 32 downstream of the boost pump 46, for sensing the pressure level of the blast air supplied to the fuel nozzle 28. The sensor 49 operates to signal the controller 53 by means of a signal line 51 to close the bypass branch conduit 44 and to open the boost pump branch conduit 42 whenever the sensed pressure level falls below a predetermined threshold. Conversely, the sensor 49 signals the controller 53 to close the boost pump branch conduit 42 and to open the bypass branch conduit 44 whenever blast air pressure boosting is not required.

Another embodiment of the pressure boost system 12 is shown in Figure 3. As shown, the blast air conduit 32 includes a boost pump 146 connected in-line for boosting the pressure level, when required, of the blast air supplied to the fuel nozzle 28. In this embodiment, the pump 146 comprises a vane-type compressor or the like which is again driven by an external source, such as an electrical drive system (not shown). This pump 146 has to be of a type which will pass the blast air flow relatively freely when the pump is not energised. Thus, the pump may be energised when desired to boost the pressure of the blast air flow, and de-energised under other conditions to allow free flow to the fuel nozzle 28 whenever the main engine compressor 14 provides sufficient blast air pressure and flow. As Figure 3 illustrates, operation of the boost pump 146 may be conveniently controlled by a pressure sensor 149 mounted in the conduit 32 downstream of the boost pump 146, This sensor 149 operates to signal a boost pump on-off switch 150 via a signal line 151 to operate the boost pump 146 whenever additional blast air pressure is required.

A variety of modifications are possible. For example, a variety of boost pump control schemes are possible, such as direct wiring of the boost pump to an engine starter motor, or the use of a simple manually controlled on-off switch.

## CLAIMS

1. A gas turbine engine comprising a combustor, a turbine driven by exhaust gases from the combustor, and a compressor driven by the turbine and connected to supply compressed air to the combustor, the combustor including a fuel nozzle to which fuel is supplied for atomisation by a portion of the compressed air supplied by the compressor,

characterised by a boost compressor system (12) connected in a conduit (32) through which the said portion of the compressed air is supplied to the fuel nozzle (28), the boost compressor system (12) being operated under certain engine operating conditions to increase the pressure of the compressed air supplied to the fuel nozzle (28).

2. A gas turbine engine as claimed in Claim 1, which also includes a pressure sensing device (49, 149) arranged to sense the pressure of the compressed air supplied to the fuel nozzle (28) by the boost compressor system (12), and connected (through 51, 151) to control operation of the boost compressor system (12) in dependence on the sensed pressure.

3. A gas turbine engine as claimed in Claim 1 or Claim 2, in which the boost compressor system (12) comprises a boost compressor (46) and a bypass conduit (44) connected in parallel, and a valve arrangement (48) for routing the compressed air flow in the conduit (32) either through the boost compressor (46) or through the bypass conduit (44) to the fuel nozzle (28).

4.   A gas turbine engine as claimed in Claim 1 or
Claim 2, in which the boost compressor system (12)
comprises a boost compressor (146) which is energised
under the said certain engine operating conditions, to
increase the pressure of the air supplied to the fuel
nozzle (28), there being a relatively free flow path,
when the compressor (146) is de-energised, for the flow
of compressed air from the conduit (32) to the fuel
nozzle (28).

5.   A gas turbine engine as claimed in any of the
preceding claims, which includes a recuperative heat
exchanger connected to transfer heat from turbine exhaust
gases to the compressed air flowing from the compressor
to the combustor,

characterised in that the conduit (32) for supplying
a portion of the compressed air to the fuel nozzle (28)
leads off from the flow path (26) of compressed air from
the compressor (14), upstream of the heat exchanger (24).

✕ Fig. 1.

Fig. 2.

Fig. 3.

| Category | Citation of document with indication, where appropriate, of relevant passages | Relevant to claim |
|---|---|---|
| | US - A - 3 971 210 (ROSE)<br>* column 1, line 14 to column 4, line 39 * | 1-4 |
| | US - A - 3 866 413 (STURGESS)<br>* column 1, line 36 to column 2, line 18; abstract * | 1 |
| P | DE - A1 - 2 834 313 (PARKER- HANNIFIN CORP.)<br>* page 4 to page 5, paragraph 1 *<br>& GB - A - 2 003 552<br>& FR - A1 - 2 402 080 | 1 |
| A | DE - A1 - 2 605 454 (STAL-LAVAL TURBIN AB)<br>* page 1 * | |
| A | US - A - 3 893 292 (AMANN et al.)<br>* abstract * | |
| A | US - A - 3 600 887 (GAULT et al.)<br>* abstract * | |
| A | US - A - 3 481 145 (OLDFIELD)<br>* abstract * | |

**DOCUMENTS CONSIDERED TO BE RELEVANT**

**CLASSIFICATION OF THE APPLICATION (Int. Cl.)**

F 02 C    7/26

**TECHNICAL FIELDS SEARCHED (Int.Cl.)**

F 02 C    3/00
F 02 C    7/00
F 02 C    9/00
F 23 R    3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 15-04-1980 | STÖCKLE |

EPO Form 1503.1  06.78